# EUROPÄISCHE PATENTSCHRIFT

(11) **EP 3 782 210 B1**
(45) Veröffentlichungstag und Bekanntmachung des Hinweises auf die Patenterteilung: **11.01.2023**
(21) Anmeldenummer: 19721568.4
(22) Anmeldetag: 24.04.2019
(51) Int. Cl.: B60L 50/75, H01M 50/572, H01M 16/00, B60L 58/40

(54) **ELEKTRISCHES ENERGIESYSTEM MIT BRENNSTOFFZELLEN**
ELECTRICAL ENERGY SYSTEM COMPRISING FUEL CELLS
SYSTÈME D'ÉNERGIE ÉLECTRIQUE COMPRENANT DES PILES À COMBUSTIBLE

(30) Priorität: 17.07.2018 DE 102018211815
(43) Veröffentlichungstag der Anmeldung: 24.02.2021
(73) Patentinhaber: Audi AG, 85045 Ingolstadt (DE)
(72) Erfinder: BREU, Martin, 94377 Münster/Steinach (DE); SCHIEDERMEIER, Maximilian, 85049 Ingolstadt (DE)
(74) Vertreter: Hentrich Patent- & Rechtsanwälte PartG mbB
(86) Internationale Anmeldenummer: PCT/EP2019/060406
(87) Internationale Veröffentlichungsnummer: WO 2020/015875

(56) Entgegenhaltungen:
- EP-A1- 1 132 251
- EP-A2- 1 808 328
- EP-B1- 1 444 745
- JP-B2- 3 026 013
- US-A- 4 670 702
- US-A1- 2018 162 233

## Beschreibung

Die Erfindung betrifft ein Brennstoffzellen enthaltendes elektrisches Energiesystem und ein Verfahren zum Betreiben eines elektrischen Energiesystems für ein Kraftfahrzeug.

Das Energiesystem eines Brennstoffzellenfahrzeugs umfasst in der Regel neben dem Brennstoffzellenkreis einen HV-Batterie-Kreis (Traktionskreis), aus dem die HV-Verbraucher, wie etwa der bzw. die Pulswechselrichter bzw. die damit verbundenen elektrischen Motoren und auch andere Verbraucher, wie Heizer oder sonstige Brennstoffzellen-Nebenaggregate, gespeist werden.

Aus der DE 10 2009 027 220 A1 ist eine Vorrichtung zur Versorgung eines elektrischen Antriebs für ein Kraftfahrzeug bekannt mit einem Energienetz, das mit dem Antrieb verbunden ist und eine Brennstoffzelleneinheit und einen Energiespeicher aufweist, wobei die Brennstoffzelleneinheit und der Energiespeicher gekoppelt sind. Ein erster Umrichter ist zwischen der Brennstoffzelleneinheit und dem Antrieb angeordnet, ein zweiter Umrichter zwischen dem Energiespeicher und dem Antrieb.

Die DE 20 2007 011 894 U1 offenbart ein kombiniertes Antriebsaggregat, in dem eine Brennstoffzelle und eine sekundäre Spannungsquelle über eine gemeinsame Steuereinheit mit einer Antriebseinheit verbunden sind.

Aufgrund unterschiedlicher Entwicklungsschwerpunkte werden das Brennstoffzellensystem und die HV-Batterie oft getrennt entwickelt und entsprechend auch in separaten Gehäusen verbaut. Dadurch gibt es sowohl für das Brennstoffzellensystem als auch für die HV-Batterie eine eigene Zu- und Abschaltbox, nämlich eine FCJB (Fuel Cell Junction Box) für das Brennstoffzellensystem und eine BJB (Batterie Junction Box) für die HV-Batterie. Es werden somit zwei ähnliche Zu- und Abschaltboxen im Fahrzeug verbaut. Dadurch entstehen zusätzliche Kosten. Ferner benötigten diese beiden Zu- und Abschaltboxen einen nicht unwesentlichen Bauraum und verursachen ein Mehrgewicht von einigen Kilogramm.

Die EP 1 632 004 A1 beschreibt eine Anordnung zur drahtlosen Versorgung eines Feldgerätes in einer verfahrenstechnischen Anlage mit elektrischer Energie. In dem Feldgerät sind in einem Gehäuse wenigstens eine Brennstoffzelle sowie ein elektrischer Energiespeicher integriert.

In der JP 3 026013 B2 wird ein Energiesystem mit parallel geschalteter Brennstoffzelle und Batterieeinheit und eine zentrale An-/Abschaltvorrichtung mit mehreren Transistoren/FET beschrieben. Im Fall eines kritischen Zustands wird das System mittels der zentralen An-/Abschaltvorrichtung vom Verbraucher getrennt.

In der US 4 670 702 A wird ein Energiesystem mit einer Brennstoffzelle und einer Batterie beschrieben, wobei die beiden Energiespeichereinheiten mittels einer gemeinsamen Schaltvorrichtung mit mehreren Halbleiterschaltern vom Verbraucher getrennt werden können. Kritische Überspannungen lassen sich mit der gemeinsamen Schaltvorrichtung verhindern.

Die vorliegende Erfindung hat sich die Aufgabe gestellt, Vorrichtungen und Verfahren zur Verfügung zu stellen, welche die geschilderten Nachteile zumindest teilweise beseitigen.

Die Aufgabe wird erfindungsgemäß gelöst durch ein Energiesystem mit den Merkmalen des unabhängigen Patentanspruchs 1 und ein Verfahren mit den Merkmalen des Patentanspruchs 9. Ausgestaltungen ergeben sich aus den abhängigen Ansprüchen und der Beschreibung.

Erfindungsgemäß kann durch die Integration der HV-Batterie und des Brennstoffzellensystems in eine gemeinsame Einheit eine gemeinsame Zu- und Abschalteinheit (HVJB - High Voltage Junction Box) genutzt werden.

Gegenstand der Erfindung ist ein Energiesystem für ein Fahrzeug, das mindestens eine Brennstoffzelle und mindestens eine HV-Batterie umfasst, die über eine gemeinsame Zu- und Abschalteinheit (High Voltage Junction Box - HVJB) mit einem Stromkreis (Traktionskreis bzw. Zwischenkreis) gekoppelt sind, der daran angeschlossene elektrische Verbraucher mit elektrischer Energie versorgt. Elektrische Verbraucher sind beispielsweise Pulswechselrichter und daran angeschlossene Elektromotoren oder weitere HV-Komponenten, wie Nebenaggregate der Brennstoffzelle, Ladegeräte, 12 V DC/DC-Wandler, HV-Heizer, elektrische Klimakompressoren etc.

In einer Ausführungsform des Energiesystems sind die mindestens eine Brennstoffzelle und die mindestens eine HV-Batterie in einem gemeinsamen Gehäuse angeordnet. Dadurch sind keine externen HV-Leitungen zwischen den beiden Energiequellen notwendig und es kann eine gemeinsame Zu- und Abschalteinheit (HVJB) genutzt werden. In einer weiteren Ausführungsform ist die gemeinsame Zu- und Abschalteinheit ebenfalls in dem gemeinsamen Gehäuse angeordnet. Es ist aber auch eine Teilintegration oder Anbaulösung für die beiden HV-Energiequellen möglich.

In einer Ausführungsform des Energiesystems umfasst die gemeinsame Zu- und Abschalteinheit mindestens ein elektromechanisches Schaltelement, insbesondere einen Schütz.

In einer weiteren Ausführungsform des Energiesystems umfasst die gemeinsame Zu- und Abschalteinheit mindestens einen Halbleiterschalter, beispielsweise mindestens einen IGBT oder einen MOS-FET.

In einer weiteren Ausführungsform des Energiesystems umfasst die gemeinsame Zu- und Abschalteinheit mindestens ein pyrotechnisches Kurzschlusselement, das dafür eingerichtet ist, bei einem Unfall des Kraftfahrzeugs zu zünden und die mindestens eine Brennstoffzelle und die mindestens eine HV-Batterie von dem Stromkreis (Traktionskreis bzw. Zwischenkreis) zu trennen, mit dem sie gekoppelt sind.

In einer weiteren Ausführungsform des Energiesystems umfasst die gemeinsame Zu- und Abschalteinheit mindestens einen Isolationswächter.

Das erfindungsgemäße Energiesystem bietet den Vorteil, dass die

Hauptkomponenten der Zu- und Abschaltboxen (Schütze, Vorladung, Pyro-Trenner, Isolationswächter, Strom- und Spannungsmessvorrichtungen etc.) nicht mehr doppelt im Fahrzeug verbaut werden müssen und dadurch auch wesentlich besser ausgenutzt werden.

Zu den Vorteilen des erfindungsgemäßen Energiesystems zählen Gewichts- und Bauraumersparnis, eine Verringerung der Bauteilanzahl und eine bessere Ausnutzung der Bauteile, eine reduzierte Systemkomplexität, eine Verringerung des Verkabelungsaufwands und des Ansteueraufwands für die Zu- und Abschaltboxen sowie eine Senkung der Gesamtkosten für das Energiesystem.

Weitere Vorteile und Ausgestaltungen der Erfindung ergeben sich aus der Beschreibung und den beiliegenden Zeichnungen.

Gegenstand der Erfindung ist auch ein Verfahren zum Betreiben des erfindungsgemäßen Energiesystems. Dabei werden die mindestens eine Brennstoffzelle und die mindestens eine HV-Batterie über die gemeinsame Zu- und Abschalteinheit mit einem Stromkreis verbunden, an den elektrische Verbraucher angeschlossen sind (Traktionskreis bzw. Zwischenkreis).

In einer Ausführungsform des Verfahrens werden die mindestens eine Brennstoffzelle und die mindestens eine HV-Batterie über die gemeinsame Zu- und Abschalteinheit von dem Stromkreis getrennt, wenn im Energiesystem eine kritische Überspannung, ein Kurzschluss oder ein anderer kritischer Zustand auftritt oder das Fahrzeug einen Unfall erleidet. Dadurch werden Folgeschäden durch Hochspannungsüberschläge vermieden.

In einer weiteren Variante werden die mindestens eine Brennstoffzelle und die mindestens eine HV-Batterie über die gemeinsame Zu- und Abschalteinheit reversibel mit dem Traktionskreis verbunden oder von ihm getrennt. Beispielsweise können bei Inbetriebnahme des Fahrzeugs Brennstoffzelle und HV-Batterie mit dem Traktionskreis verbunden und bei Abstellen des Fahrzeugs wieder getrennt werden, um durch Hochspannung verursachte Gefahren zu vermeiden. Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsformen in den Zeichnungen schematisch dargestellt und wird unter Bezugnahme auf die Zeichnungen weiter beschrieben. Es zeigt:
- Figur 1: eine schematische Darstellung eines Energiesystems des Standes der Technik mit angeschlossenen Verbrauchern;
- Figur 2: eine schematische Darstellung einer Ausführungsform des erfindungsgemäßen Energiesystems mit angeschlossenen Verbrauchern.

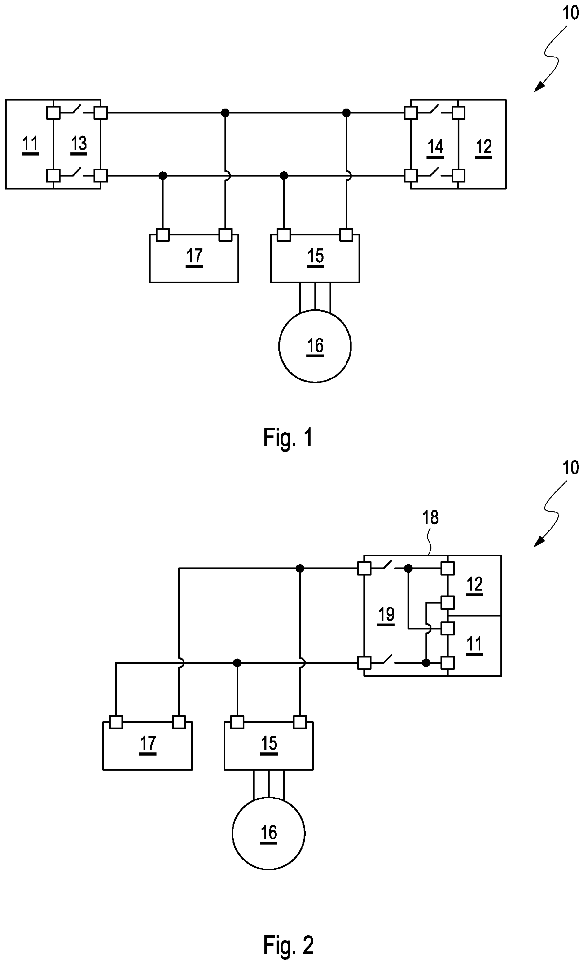

Figur 1 zeigt eine schematische Darstellung eines Energiesystems des Standes der Technik mit angeschlossenen Verbrauchern 15, 16, 17. Das Energiesystem 10 umfasst als Energiequellen eine Brennstoffzelle 11 und eine FIV-Batterie 12. Diese sind jeweils über eine zugeordnete Zu- und Abschalteinheit 13, 14 mit dem Traktionskreis verbunden, die Brennstoffzelle
11 über eine FCJB (Fuel Cell Junction Box) 13 und die FIV-Batterie 12 über eine BJB (Battery Junction Box) 14. An den Traktionskreis sind Pulswechselrichter 15 und Elektromotoren 16 angeschlossen, sowie weitere FIV-Komponenten 17, wie Nebenaggregate der Brennstoffzelle, Ladegeräte, 12 V DC/DC-Wandler, HV-Heizer, elektrische Klimakompressoren etc.

Figur 2 zeigt eine schematische Darstellung einer Ausführungsform des erfindungsgemäßen Energiesystems 10 mit angeschlossenen Verbrauchern 15, 16, 17. Das Energiesystem 10 umfasst als Energiequellen eine Brennstoffzelle 11 und eine HV-Batterie 12, die in ein gemeinsames Gehäuse 18 integriert sind, in dem sich auch eine gemeinsame Zu- und Abschalteinheit (HVJB) 19 befindet. Mit der HVJB 19 lassen sich BZ 11 und HV-Batterie 12 mit dem Traktionskreis verbinden oder von diesem trennen. An den Traktionskreis des Energiesystems 10 sind mindestens ein Pulswechselrichter 15 und mindestens ein Elektromotor 16 angeschlossen, sowie weitere HV-Komponenten 17, wie Nebenaggregate der Brennstoffzelle, Ladegeräte, 12 V DC/DC-Wandler, HV-Heizer, elektrische Klimakompressoren etc.

### Bezuqszeichenliste

- 10: Energiesystem
- 11: Brennstoffzelle (BZ)
- 12: HV-Batterie
- 13: Zu- und Abschaltbox BZ (FCJB)
- 14: Zu- und Abschaltbox HV-Batterie (BJB)
- 15: Pulswechselrichter (PWR)
- 16: Elektromotor (EM)
- 17: Sonstige HV-Komponenten
- 18: Gehäuse
- 19: gemeinsame Zu- und Abschaltbox (HVJB)

## Patentansprüche

1. Energiesystem (10) für ein Fahrzeug, umfassend mindestens eine Brennstoffzelle (11) und mindestens eine HV-Batterie (12), die über eine gemeinsame Zu- und Abschalteinheit (19) mit einem Stromkreis gekoppelt sind, der daran angeschlossene elektrische Verbraucher (15, 16, 17) mit elektrischer Energie versorgt, worin die mindestens eine Brennstoffzelle (11) und die mindestens eine HV-Batterie (12) in einem gemeinsamen Gehäuse (18) angeordnet sind und worin die gemeinsame Zu- und Abschalteinheit (19) ebenfalls in dem gemeinsamen Gehäuse (18) angeordnet ist.

2. Energiesystem (10) nach Anspruch 1, worin die Zu- und Abschalteinheit (19) mindestens ein elektromechanisches Schaltelement umfasst.

3. Energiesystem (10) nach Anspruch 2, worin das elektromechanische Schaltelement ein Schütz ist.

4. Energiesystem (10) nach einem der voranstehenden Ansprüche, worin die Zu- und Abschalteinheit (19) mindestens einen Halbleiterschalter umfasst.

5. Energiesystem (10) nach Anspruch 4, worin die Zu- und Abschalteinheit (19) mindestens einen IGBT oder einen MOS-FET umfasst.

6. Energiesystem (10) nach einem der voranstehenden Ansprüche, worin die Zu- und Abschalteinheit (19) mindestens ein pyrotechnisches Kurzschlusselement umfasst, das dafür eingerichtet ist, bei einem Unfall des Kraftfahrzeugs zu zünden und die mindestens eine Brennstoffzelle (11) und die mindestens eine HV-Batterie (12) von dem Stromkreis zu trennen, mit dem sie gekoppelt sind.

7. Energiesystem (10) nach einem der voranstehenden Ansprüche, worin die Zu- und Abschalteinheit (19) mindestens einen Isolationswächter umfasst.

8. Verfahren zum Betreiben eines Energiesystems (10) nach einem der voranstehenden Ansprüche, worin die mindestens eine Brennstoffzelle (11) und die mindestens eine HV-Batterie (12) über die gemeinsame Zu- und Abschalteinheit (19) mit einem Stromkreis verbunden werden, an den elektrische Verbraucher (15, 16, 17) angeschlossen sind, und worin die mindestens eine Brennstoffzelle (11) und die mindestens eine HV-Batterie (12) über die gemeinsame Zu- und Abschalteinheit (19) von dem Stromkreis getrennt werden, wenn das Fahrzeug einen Unfall erleidet.

## Claims

1. An energy system (10) for a vehicle comprising at least one fuel cell (11) and at least one HV-battery (12), coupled via a common switch-on and switch-off unit (19) to a circuit supplying electrical power to electrical loads (15, 16, 17) connected thereto, the at least one fuel cell (11) and the at least one HV-battery (12) being disposed in a common housing (18) and wherein the common switch-on and switch-off unit (19) is also disposed in the common housing (18).

2. The energy system (10) according to claim 1, wherein the switch-on and switch-off unit (19) comprises at least one electromechanical switch element.

3. The energy system (10) according to claim 2, wherein the electromechanical switch element is a contactor.

4. The energy system (10) according to any one of preceding claims, wherein the switch-on and switch-off unit (19) comprises at least one semiconductor switch.

5. The energy system (10) according to claim 4, wherein the switch-on and switch-off unit (19) comprises at least one of an IGBT or a MOS-FET.

6. The energy system (10) according to any one of preceding claims, wherein the switch-on and switch-off unit (19) comprises at least one pyrotechnic shorting element adapted to ignite and pre-disconnect the at least one fuel cell (11) and the at least one HV-battery (12) from the circuit to which they are coupled in the event of an accident of the motor vehicle.

7. The energy system (10) according to any one of preceding claims, wherein the switch-on and switch-off unit (19) comprises at least one isolation guard.

8. A method of operating an energy system (10) according to any one of preceding claims, wherein the at least one fuel cell (11) and the at least one HV-battery (12) are connected via the common switch-on and switch-off unit (19) to a circuit, which is connected to the electrical load (15, 16, 17), and wherein the at least one fuel cell (11) and the at least one HV-battery (12) are disconnected from the circuit via the common switch-on and switch-off unit (19) when the vehicle suffers an accident.

## Revendications

1. Système d'énergie (10) pour un véhicule, comprenant au moins une pile à combustible (11) et au moins une batterie haute tension (12), qui sont couplées à un circuit via une unité commune de connexion et de déconnexion (19), qui alimente des consommateurs électriques (15, 16, 17) reliés à celui-ci en énergie électrique, dans lequel la au moins une pile à combustible (11) et la au moins une batterie haute tension (12) sont agencées dans un boîtier commun (18) et dans lequel l'unité commune de connexion et de déconnexion (19) est également agencée dans le boîtier commun (18).

2. Système d'énergie (10) selon la revendication 1, dans lequel l'unité de connexion et de déconnexion (19) comprend au moins un élément de commutation électromécanique.

3. Système d'énergie (10) selon la revendication 2, dans lequel l'élément de commutation électromécanique est un contacteur.

4. Système d'énergie (10) selon l'une quelconque des revendications précédentes, dans lequel l'unité de connexion et de déconnexion (19) comprend au moins un commutateur à semi-conducteurs.

5. Système d'énergie (10) selon la revendication 4, dans lequel l'unité de connexion et de déconnexion (19) comprend au moins un IGBT ou un MOS-FET.

6. Système d'énergie (10) selon l'une quelconque des revendications précédentes, dans lequel l'unité de connexion et de déconnexion (19) comprend au moins un élément de court-circuit pyrotechnique qui est configuré pour se déclencher en cas d'accident du véhicule et pour séparer la au moins une pile à combustible (11) et la au moins une batterie haute tension (12) du circuit auquel elle sont couplées.

7. Système d'énergie (10) selon l'une quelconque des revendications précédentes, dans lequel l'unité de connexion et de déconnexion (19) comprend au moins un contrôleur d'isolement.

8. Procédé de fonctionnement d'un système d'énergie (10) selon l'une quelconque des revendications précédentes, dans lequel la au moins une pile à combustible (11) et la au moins une batterie haute tension (12) sont reliées via l'unité commune de connexion et de déconnexion (19) à un circuit auquel des consommateurs électriques (15, 16, 17) sont connectés, et dans lequel la au moins une pile à combustible (11) et la au moins une batterie haute tension (12) sont séparées du circuit via l'unité commune de connexion et de déconnexion (19) lorsque le véhicule subit un accident.
